Europäisches Patentamt

**European Patent Office**

**Office européen des brevets**

(11) Publication number: **0 409 431 A2**

# EUROPEAN PATENT APPLICATION

(21) Application number: **90307075.3**

(22) Date of filing: **28.06.90**

(51) Int. Cl.5: **H02P 13/06**

(30) Priority: **07.07.89 US 376794**

(43) Date of publication of application:
**23.01.91 Bulletin 91/04**

(84) Designated Contracting States:
**DE FR GB IT**

(71) Applicant: **AMERICAN TELEPHONE AND TELEGRAPH COMPANY**
**550 Madison Avenue**
**New York, NY 10022(US)**

(72) Inventor: **Tardy, John**
**10 Claudia Road**
**Somerville, New Jersey 08876(US)**

(74) Representative: **Buckley, Christopher Simon Thirsk et al**
**AT&T (UK) LTD. AT&T Intellectual Property Division 5 Mornington Roadoadoad**
**Woodford Green, Essex IG8 OTU(GB)**

(54) **Conductivity state monitor for thyristor transformer tap switching devices.**

(57) A transformer apparatus uses SCR devices (152,153; 252,253) as tap switching elements for a tapped winding (113,117) of a transformer (100). A snubber circuit (180,280) is connected in parallel with each tap switching element. Current flow in a snubber circuit associated with each SCR device is monitored to determine the present switched state of that SCR device. This monitored current flow is utilized by control circuitry (130) to permit turn on of an SCR device only when all of the tap switching SCR devices are presently non-conducting.

# CONDUCTIVITY STATE MONITOR FOR THYRISTOR TRANSFORMER TAP SWITCHING DEVICES

## Field of the Invention

This invention relates to switching arrangements and particularly to transformer tap switching arrangements utilizing thyristor switching devices.

## Background of the Invention

Semiconductor devices such as bipolar or MOSFET transistors have been successfully used as tap switching devices for transformers in low power ranges up to 1KVA. Use of these semiconductor devices permits use of low power drive signals and a high speed of switching transition as compared with the mechanical switches typically used.

At higher power levels a more robust semiconductor switching device is required since momentary overloads may destroy the transistor switching devices. Thyristors such as SCRs have the necessary power handling capability, however as tap switching devices it is difficult to coordinate the turn-off of one device with the turn-on of another device because turn-off of a thyristor is not controlled by a control signal applied to a control electrode as is the case with a transistor. Turn-off of a thyristor is accomplished by reducing the current flow in the main conduction path of the device.

Control of tap switching has required that a tap switching transition be at a zero crossing of the input current to the transformer. One switch must be enabled when the current in the presently conducting switch goes to zero. This requirement introduces undesirable operational and circuit complexities into the control system.

Hence thyristor devices such as SCRs have not been deemed suitable for application as a tap switching element because of their disinclination to turn off unless so stimulated by a reduction in the SCR device current. As a practical consequence a natural current reduction leading to turn off can take as long as 8 milliseconds at 60 Hz, which is the frequency of the input AC voltage. Hence at the instant of a tap switch more than one of the SCR devices at a time could be conducting.

## Summary of the Invention

SCR devices are used in the transformer apparatus disclosed herein, as tap switching elements for a tapped winding of the transformer. In accord with the invention current flow in a snubber circuit associated, with each SCR device is monitored to determine the present switched state of that SCR device. This monitored current flow is utilized by control circuitry to permit turn-on of an SCR device only when all of the tap switching SCR devices are presently non-conducting.

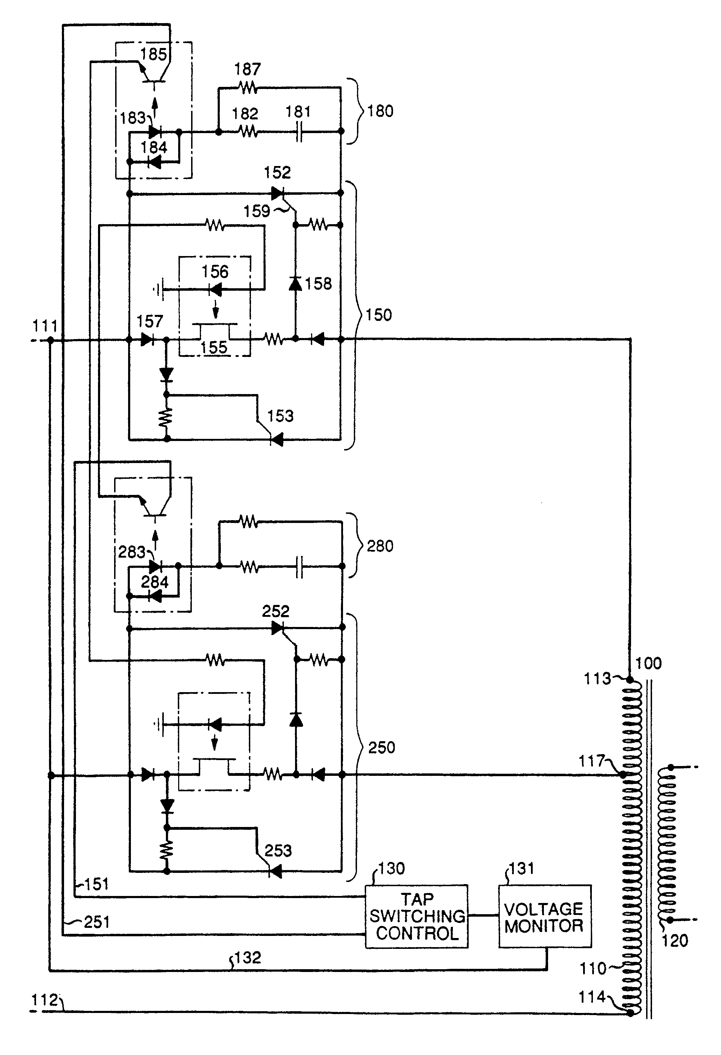

## Brief Description of the Drawing

The sole drawing is a schematic of a tap switching arrangement for a transformer embodying the principles of the invention;

## Detailed Description

A transformer 100 having a primary winding 110 and a secondary winding 120 is disclosed in the drawing. Input lead 111 and return lead 112 are connected to receive an input AC signal. A first AC switch 150 couples the input lead 111 to an end terminal 113 of primary winding 110. A tap 117 intermediate the end terminals 113 and 114 of the primary winding 110 is coupled to the input lead 111 via a second AC switch 250.

Activation of the two AC switches 150 and 250 is in response to a drive signal supplied by tap switching control 130, via leads 151 and 152, respectively. Each AC switch in the illustrative embodiment includes a pair of oppositely oriented SCR devices. AC switch 150 includes the oppositely oriented SCR devices 152 and 153. Two oppositely oriented SCR devices 252 and 253 are included in AC switch 250. Two snubber networks 180 and 280 are connected in parallel with the AC switches 150 and 250, respectively.

SCR triggering circuitry responsive to the tap switching control 130 is included in each AC switch. In each switch activation of the SCR device oriented in polarity to conduct in the present half cycle is enabled conducting in response to a drive signal. In the case of switch 150 an optical drive signal is applied to the photo transistor 155 by current responsive light emitting diode 156. If, for example, current flow is such that the SCR device 152 is properly oriented in polarity to be conducting, the enabling of photo transistor 155 applies a triggering signal, via diodes, 157 and 158, to the trigger electrode 159 of SCR device 152 thereby triggering the SCR device 152 into conduction. Triggering the other SCR devices 153, 252 and 253 into conduction utilizes identical triggering circuitry and techniques and it is not believed necessary to describe this process in detail.

The tap switching control is responsive to a voltage monitor 131 connected, via lead 132, to monitor the input voltage at the input lead 111. It compares that voltage with a reference and enables either switch 150 or 250 to connect the input lead 111 to the primary winding 110 in order to maintain an output voltage limitation at the secondary winding 120. If the input voltage is normal the switch 150 is actively conducting, but if the input voltage is below normal the switch 250 is triggered conducting to prevent the output falling below a prescribed limit.

While a particular arrangement is described in the illustrative embodiment, it is to be understood that the tap switching control described may be utilized for many varied purposes. The invention is not to be limited to the particular purposes of the illustrative circuit described.

Associated with each switch 150 and 250 are the identical snubber circuits 180 and 280, respectively. Snubber circuit 180 includes a capacitor 181, a resistor 182 and a pair of paralleled oppositely poled current responsive light emitting diodes 183 and 184. Resistor 187 permits a slow discharge of capacitor 181. The snubber circuit is operative for absorbing voltage and current flow when an SCR device is turned-off. Hence existence of current flow in the snubber circuit is an indication that the SCR device connected in parallel with it has ceased conducting current.

The light emitting diodes 183 and 184 are optically coupled to activate a photo transistor 185 whose main conduction path is included in the trigger signal application path for the AC switch 250. Hence a trigger signal cannot be applied to the AC switch 250 until the AC switch 150 has ceased conduction (ie or until a current has begun to flow in the snubber circuit of AC switch 150 thereby activating light emitting diodes 183 or 184).

The light emitting diodes 283 and 284 of snubber circuit 280 and the associated photo transistor 285 operate in the same manner in assuring that the AC switch 150 is not triggered into conduction until the AC switch 250 has ceased conduction.

While a particular embodiment of the invention has been disclosed it is to be understood that many varied arrangements of the invention may be devised without departing from the spirit and scope of the invention.

## Claims

1. A magnetic component comprising:
a winding including first and second end terminals and a tap to the winding intermediate the first and second end terminals,
an input for accepting an alternating signal and including an input lead and a return lead,
CHARACTERIZED BY
first and second switches connecting the input to the first end terminal and the tap, respectively,
means for enabling conduction in the first and second switches, and means for sensing current flow in the first and second switches, and means for inhibiting the enabling of conduction in one of the first and second switches in response to the means for sensing current flow if another of the first and second switches is conducting current.

2. A magnetic component as claimed in claim 1, and FURTHER CHARACTERIZED BY:
first and second paired thyristor devices in each of the first and second switches, and
first and second snubber circuits shunting the first and second switches, and each snubber circuit including current sensing means,
the means for inhibiting application of drive signals to the one of the paired thyristors in response to current flow in the current sensing means of a snubber circuit of another of the paired thyristors.

3. A magnetic component as claimed in claim 2, and FURTHER CHARACTERIZED BY:
means for monitoring an input voltage, and means for initiating conduchon in one of the first and second switches in response to the means for monitoring.

4. A magnetic component as claimed in claim 3, and FURTHER CHARACTERIZED IN THAT:
the means for sensing current flow in the first and second switches includes first and second light emitting devices connected in the first and second snubber circuits respectively, and
the means for initiating conduction in one of the first and second switches including first and second photo transistors optically coupled to the first and second light emitting devices, and connected to control current flow in the first and second switches.